# EUROPEAN PATENT SPECIFICATION

(11) **EP 0 577 912 B1**
(45) Date of publication and mention of the grant of the patent: **27.09.1995**
(21) Application number: 92850171.7
(22) Date of filing: 08.07.1992
(51) Int. Cl.: F16C 33/78

(54) **Sealed bearing**
Abgedichtetes Lager
Palier hermétique

(43) Date of publication of application: 12.01.1994
(73) Proprietor: AB SKF, S-415 50 Göteborg (SE)
(72) Inventor: Stackling, Hakan, S-436 39 Askim (SE); Olsson, Jonas, S-431 68 Mölndal (SE)
(74) Representative: Forsberg, Lars-Ake

(56) References cited:
- DE-A- 2 044 476
- DE-A- 3 906 656
- DE-C- 1 073 809
- US-A- 2 727 764
- US-A- 4 333 694

## Description

The present invention refers to sealed bearings as defined in the preamble of claim 1.

The "life span" of a bearing is reduced by dirt and impurities penetrating into the bearing. The assembly of the bearing on one hand may occur in dirty surroundings, and the bearings may, on the other hand during operation, be subjected to dirt, metal chips, etcetera. At use of bearings in continuous casting machines, in rolling mills, paper making machines, etcetera, the bearings may be highly exposed to different kinds of impurities. This is furthermore putting high demands on maintenance.

Thus a good seal for a bearing in many cases can be most important, on one hand for increasing the life spann and on the other hand for reducing the requirement of maintenance.

Known solutions for designing sealed bearings are based on two different principles. A seal can either be assembled on a bearing or be built into the bearing. Embodiments of how a seal is assembled on a bearing is shown e.g. in SE-B-454909 and in SE-B-451 081. The seal in these embodiments is constituted by two cooperating sheet metal rings, whereby at least one of the sheet metal rings is notch joined into the outer race ring, whereas the other is fitted to the inner race ring. This solution however means that the seal will project outside the side planes, which in some cases necessitates modifications of the bearing housing and also of the mounting and dismantling tools, etcetera.

According to the other alternative mentioned above, the seal is built into the bearing. In this case the seal is not projecting from the side surfaces of the bearing. Assembly of the seal inside one of the bearing side surfaces requires space and for this reason the width of the bearing itself has been increased in known solutions or, in the case with roller bearings the length of the rollers have alternatively been reduced. At a known, sealed bearing, the width of the bearing has been increased as compared to a corresponding unsealed bearing in order to maintain the carrying capacity. In this case the seal is mounted in a radial groove in the outer race ring, where it is fixed with a locking ring and where the opposite side of the seal engages a tapering surface on the inner race ring. (It is also known to attach the seal in the outer race ring with some type of rubber lip).

From DE-A-2 044 476 there is known a sealed bearing according to the preamble of claim 1. This known bearing is a single row ball bearing.

The attachment in a radial mounting groove requires large axial space, which means that the outer race ring necessarily will become wide if the carrying capacity shall be maintained and this is a drawback as it is desireous to keep the bearing as small and compact as possible due to the application, and to maintain the ISO-width according to standards.

Another drawback is that an attachment with a rubber lip does not give the high retaining force desired.

At spherical roller bearings, in contrast to others, the set of rollers may hit the seal and thereby make this come loose.

The purpose of the present invention is thus i.a. to provide a sealed bearing having a built-in seal and where the attachment of the seal requires a minimum of assembly space, thus that the outer race ring preferably must not be made wider at all as compared to unsealed bearings, with maintained carrying capacity, speed ranges, etcetera.

These as well as other problems are solved by a sealed bearing having the features defined in the characterizing part of claim 1.

According to a preferred embodiment the seal is fixed to the outer race ring by means of a locking ring provided in the groove.

For achieving a safe attachment of the seal member it has been established that it is particularly favourable if the locking ring is tapering and has a taper angle (β), which is somewhat smaller than the taper angle (α) of the groove, thus that a preload is obtained between locking ring and seal. It has proven itself that it is appropriate to use a taper angle (α) of the groove of between 15 and 20°.

The bearing is preferably a spherical roller bearing.

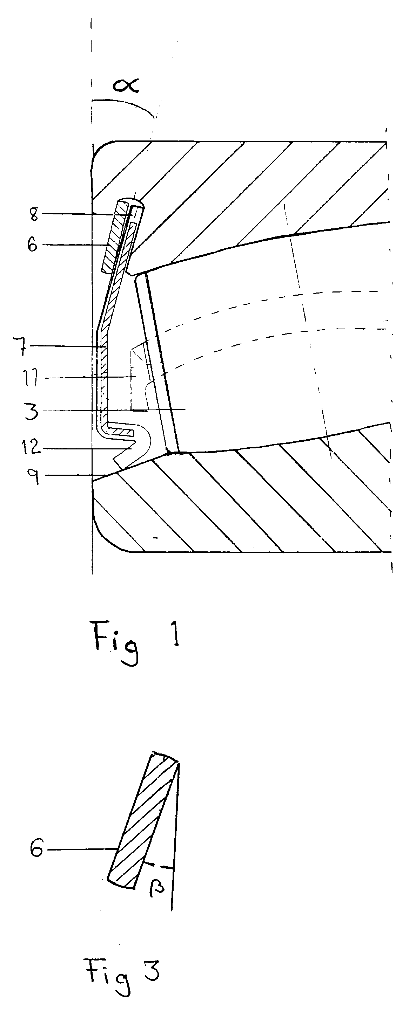

Herebelow is given a further description of the invention with reference to the accompanying drawings, whereby
Fig. 1 shows a section through the sealing member affixed to a spherical roller bearing.

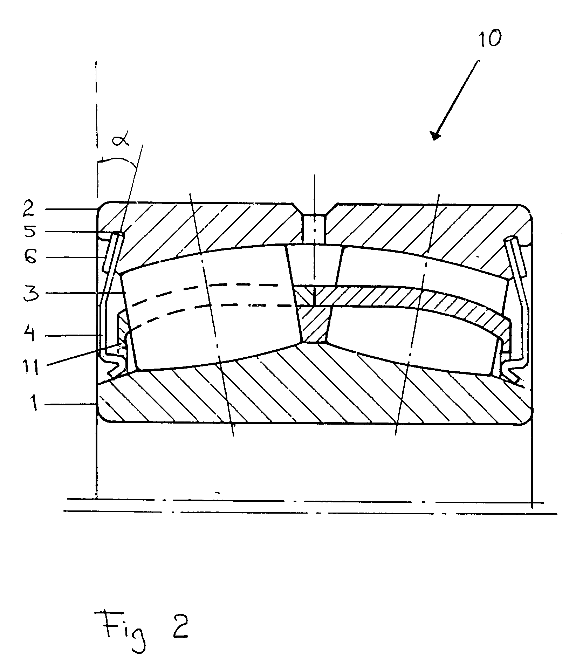

Fig. 2 shows a bearing in cross-section and having sealing members mounted thereto.
Fig. 3 is a detail view showing a portion of the locking ring and illustrating its taper angle relative to the side surface of the race ring.

The spherical roller bearing 10 incorporates inner race ring 1, outer race ring 2, rolling bodies 3 arranged between the race rings in two rows, and a roller body cage 11. Both sides of the bearing 10 are provided with sealing members 4, which, as can be seen from the figures, are situated inside the side plane of the bearing 10. The sealing members 4 are affixed in the mounting grooves 5 in the outer race ring 2. The mounting groove 5 is tapered at an angle α relative to the side plane of the bearing in the position when this side plane is parallel to a diametrical centre plane through the bearing. The centres of the different cones are situated on the axial centre line of the bearing at some distance from the intersection of this centre line with the different side planes. Angle α is preferably fifteen to twenty degrees.

The sealing member 4 comprises a circular plate ring 7, the outer part of which is tapering radially inwards at a taper angle substantially corresponding to the taper angle α of the mounting groove 5, and the inner portion of which is bent inwardly to take up an almost axial extension. The seal plate 7 is completely or partly enclosed in rubber 8, which for instance is bonded to the plate by vulcanization. At the outer periphery of the plate ring 7 the rubber seal 8 may be defined as an extension of the plate 7, whereas it at the inner periphery of the plate ring 7 constitutes an elongation 12, extending tapering angularly outwards and engaging a tapering surface 9 on the inner race ring. This surface 9 could also be spherical.

The outer portion of the sealing member 8 is mounted in the mounting groove 5 in the outer race ring 2, and it is affixed with a locking ring 6. Preferably the locking ring 6 has a tapering shape and has a taper angle β, preferably only a little smaller than the taper angle α of the mounting groove. In the embodiment shown α is about 15°, whereas β is about 11°.

As the taper angle β of the locking ring 6 is smaller than α a preload is obtained between locking ring 6 and the sealing member 4, which means that the sealing member is clamped, whereby a reliable and stable attachment is obtained. The sealing member 4 is detachable, whereby maintenance, inspection, etcetera, is facilitated.

It would be possible to use also locking rings where β = 0°, i.e. where the locking ring is not tapering. Such an embodiment would give a particularly strong clamping effect between the sealing member and the locking ring in the groove.

It is obvious that shape, choice of material, etcetera for the sealing member 4 and also for the locking ring 6 may vary like the type of bearing. The invention is neither limited in other ways to the embodiment shown but can be freely varied within the scope of the claims.

## Claims

1. A sealed bearing (10) incorporating an inner race ring (1), an outer race ring (2), rolling bodies (3) arranged between the inner race ring and the outer race ring in one or more rows, and a built-in sealing member (4), whereby the outer race ring (2) at least at one side is equipped with a mounting groove (5) for receiving said sealing member (4), said groove being situated inside the side plane of the outer race ring (2) and being arranged to taper at an angle (α) relative to the said side plane, such that the groove has an opening on the inner periphery of the outer race which opening is situated outside the race track of the outer race ring (2) and a closed inner end which lies radially outside and axially inside said opening, characterized in that the inner end is situated axially inside the outer axial limit of the race track in the outer race ring (2).

2. A sealed bearing as claimed in claim 1, wherein the rolling bodies (3) of the bearing are rollers,
**characterized therein**,
that the inner end of the mounting groove (5) is situated axially inside an imagined extension of the end plane of the adjacent roller (3).

3. A sealed bearing as claimed in claim 1 or 2,
**characterized therein**,
that the sealing member (4) engages the inner race ring (1) and is affixed to the outer race ring (2) by means of a locking ring (6) inserted in the groove (5).

4. A sealed bearing as claimed in claim 3,
**characterized therein**,
that the locking ring (6) is tapering and has a taper angle (β) somewhat smaller than the taper angle (α) of the mounting groove (5), thus that a preload is obtained between the locking ring (6) and the sealing member (4).

5. A sealed bearing as claimed in claim 4,
**characterized therein**,
that the taper angle (α) of the mounting groove is between 15 and 20°.

6. A sealed bearing as claimed in claim 3,
**characterized therein**,
that the locking ring (6) is a planar ring, without taper.

7. A sealed bearing as claimed in anyone of the preceeding claims,
**characterized therein**,
that the sealing member (4) is constituted by a reinforcing plate (7) coated with rubber (8,12) or the like, and that it is adapted to engage sealingly against a tapering or spherical surface (9) on the inner race ring.

8. A sealed bearing as claimed in anyone of the preceding claims,
**characterized therein**,
that the bearing (10) is a spherical roller bearing.

## Patentansprüche

1. Abgedichtetes Lager (10) mit einem inneren Laufring (1), einem äußeren Laufring (2), Wälzkörpern 3, die zwischen dem inneren Laufring und dem äußeren Laufring in einer oder mehreren Reihen angeordnet sind, und einem eingebauten Dichtungselement (4), wobei der äußere Laufring (2) wenigstens an einer Seite mit einer Befestigungsnut (5) zur Aufnahme des Dichtungselements (4) versehen ist, die innenseitig von der Seitenfläche des äußeren Laufrings (2) liegt und so angeordnet ist, daß sie unter einem Winkel (α) in Bezug auf die Seitenfläche konisch zuläuft, so daß die Nut auf dem inneren Umfang des äußeren Laufrings eine Öffnung, die außerhalb der Laufspur des äußeren Laufrings liegt, und ein geschlossenes inneres Ende besitzt, welches radial außerhalb und axial innerhalb von der Öffnung liegt, **dadurch gekennzeichnet**, daß das innere Ende axial innerhalb von der äußeren axialen Begrenzung der Laufspur im äußeren Laufring (2) liegt.

2. Abgedichtetes Lager nach Anspruch 1, bei welchem die Wälzkörper (3) des Lagers Rollen sind, **dadurch gekennzeichnet**, daß das innere Ende der Befestigungsnut (5) axial innerhalb von einer gedachten Verlängerung der Endfläche der benachbarten Rolle (3) liegt.

3. Abgedichtetes Lager nach Anspruch 1 oder 2, **dadurch gekennzeichnet**, daß das Dichtungselement (4) den inneren Laufring (1) berüht und am äußeren Laufring (2) mittels eines in die Nut (5) eingefügten Schließrings (6) befestigt ist.

4. Abgedichtetes Lager nach Anspruch 3, **dadurch gekennzeichnet**, daß der Schließring (6) konisch zuläuft und einen Neigungswinkel (β) besitzt, der etwas kleiner als der Neigungswinkel (α) der Befestigungsnut (5) ist, so daß sich eine Vorlast zwischen dem Schließring (6) und dem Dichtungselement (4) ergibt.

5. Abgedichtetes Lager nach Anspruch 4, **dadurch gekennzeichnet**, daß der Neigungswinkel (α) der Befestigungsnut zwischen 15 und 20° liegt.

6. Abgedichtetes Lager nach Anspruch 3, **dadurch gekennzeichnet**, daß der Schließring (6) ein ebener Ring ohne Schräge ist.

7. Abgedichtetes Lager nach einem der vorhergehenden Ansprüche, **dadurch gekennzeichnet**, daß das Dichtungselement (4) aus einer mit Gummi (8, 12) o. dgl. überzogenen Verstärkungsscheibe (7) besteht und so ausgebildet ist, daß es an eine schräge oder kugelige Oberfläche (9) am inneren Laufring abdichtend angreift.

8. Abgedichtetes Lager nach einem der vorhergehenden Ansprüche, **dadurch gekennzeichnet**, daß das Lager (10) ein Pendelrollenlager ist.

## Revendications

1. Palier étanche (10) comprenant une bague intérieure de roulement (1), une bague extérieure de roulement (2), des corps de roulement (3) placés entre la bague intérieure de roulement et la bague extérieure de roulement en une ou plusieurs rangées, et un élément d'étanchéité incorporé (4), ce qui fait que la bague extérieure de roulement (2) a au moins un côté qui est muni d'une rainure de montage (5) destinée à recevoir ledit élément d'étanchéité (4), ladite rainure étant située à l'intérieur du plan latéral de la bague extérieure de roulement (2) et disposée pour être inclinée d'un angle (α) par rapport audit plan latéral, de sorte que la rainure présnte une ouverture sur la périphérie intérieure de la bague extérieure de roulement, ouverture qui est située à l'extérieur de la piste de roulement de la bague extérieure de roulement (2), et une extrémité intérieure fermée qui s'étend radialement à l'extérieur et axialement à l'intérieur de ladite ouverture, caractérisé en ce que l'extrémité intérieure est située axialement à l'intérieur de la limite axiale externe de la piste de roulement de la bague extérieure de roulement (2).

2. Palier étanche selon la revendication 1, dans lequel les corps de roulement (3) du palier sont des rouleaux, caractérisé en ce que l'extrémité intérieure de la rainure de montage (5) est située axialement à l'intérieur du prolongement imaginaire du plan d'extrémité du rouleau adjacent (3).

3. Palier étanche selon la revendication 1 ou 2, caractérisé en ce que l'élément d'étanchéité (4) porte contre la bague intérieure de roulement (1) et est fixé à la bague extérieure de roulement (2) au moyen d'une bague de blocage (6) insérée dans la rainure (5).

4. Palier étanche selon la revendication 3, caractérisé en ce que la bague de blocage (6) est conique et présente un angle d'inclinaison (β) quelque peu plus petit que l'angle d'inclinaison (α) de la rainure de montage (5), de sorte que l'on obtient une précharge entre la bague de blocage (6) et l'élément d'étanchéité (4).

5. Palier étanche selon la revendication 4, caractérisé en ce que l'angle d'inclinaison (α) de la rainure de montage est compris entre 15 et 20°.

6. Palier étanche selon la revendication 3, caractérisé en ce que la bague de blocage (6) est une bague plate, sans conicité.

7. Palier étanche selon l'une quelconque des précédentes revendications, caractérisé en ce que l'élément d'étanchéité (4) est constitué par une plaque de renfort (7) recouverte de caoutchouc (8, 12) ou d'un autre produit similaire, et en ce qu'il est apte à venir porter de manière étanche contre une surface conique ou sphérique (9) de la bague intérieure de roulement.

8. Palier étanche selon l'une quelconque des précédentes revendications, caractérisé en ce que le palier (10) est un palier à corps de roulement sphériques.
